# EUROPEAN PATENT APPLICATION

(11) **EP 2 815 642 A1**
(43) Date of publication of application: **24.12.2014**
(21) Application number: 13748850.8
(22) Date of filing: 11.02.2013
(51) Int. Cl.: A01K 61/02

(54) **DEVICE FOR DISPENSING FOOD TO FISH IN AQUARIUMS**

(30) Priority: 13.02.2012 ES 201230214
(71) Applicant: Suñe Ibarra, Manuel Enrique, 08506 Barcelona (ES)
(72) Inventor: Suñe Ibarra, Manuel Enrique, 08506 Barcelona (ES)
(74) Representative: Toro Gordillo, Ignacio Maria
(86) International application number: PCT/ES2013/070078
(87) International publication number: WO 2013/121064

(57) **Abstract**

Device for dispensing food to fish in aquariums, composed of a casing inside which there are areas successively in communication with one another vertically, since inside the casing there is a series of shelves attached alternately to two of the opposing side faces of the actual casing, thereby forming a series of cascades that causes the water and therefore the food to run from one shelf to the next. The dispensing device is partly submerged in the water, with its upper part projecting out of the water, with the food being deposited on the shelf in the upper part and, by means of impulsion of water using a pump, said food will be moved from one shelf to the next, alternately, towards an outlet in the zone underneath the lower shelf.

## Description

### OBJECT OF THE INVENTION

The present invention relates to a food dispenser for fish in aquariums, designed to achieve optimum maintenance and care of fish, both freshwater and saltwater, kept in aquariums.

The object of the invention is to ensure the appropriate dosage of food for fish that breed inside aquariums.

### BACKGROUND OF THE INVENTION

Currently, there are three types of food for the care and feeding of ornamental fish, one kind known as dehydrated, another as live food and another as frozen food, wherein the latter is based on paste-like mixture made from insect grubs or larvae, marine shrimp and chunks of turkey heart ground into very small pieces.

This frozen food is more delicate and complicated to administer than dry food, since it is necessary to supply the doses without incurring in useless excesses which could over-feed the fish, causing not only contamination in the aquarium water from uneaten leftovers, but also inadequately feeding the fish.

In other words, the failure to adequately dose the fishes' food entails the generation of undesirable elements for the wellbeing and balance of the aquarium, bearing in mind that directly ingesting dehydrated food can produce intestinal occlusions in fish, leading to more serious disorders and even death.

It is also noteworthy that for sensitive species such as discus fish, these prefer to eat undisturbed at meal times, meaning that a human presence is not advisable, since they are easily scared and susceptible to apathy.

Finally, it should be mentioned that when there is surplus food owing to inappropriate dosage, this surplus is deposited in the bottom of the tank, becoming lost in the drainage gravel and inaccessible for consumption, resulting in the decomposition of the food that gives rise to imbalances in the form of inadequate levels of nitrates and phosphates, generating unsightly algae and cloudiness of the water. Therefore, it is desirable to obtain the convenient and orderly dispensing of frozen food and even live food, avoiding wasting the food and the resulting increase in nitrates and phosphates in the water, in which case the feed should be rationed in small doses over a short time period and entirely consumed by the fish.

### DESCRIPTION OF THE INVENTION

To avoid the aforementioned problems and achieve the desired function described in the final paragraph of the previous section, the dispenser of the invention has been envisaged, being preferentially and fundamentally designed to dispense thawed paste-like foods based on insect grubs and larvae, marine shrimp, live worms such as grindal worms and ground turkey heart, and even for dosing and dispensing dry pelleted feed.

The dispenser is formed by a box inside of which is a series of areas successively communicated vertically, as a result of which the inside of the box features a series of shelves that are arranged alternately on both of the opposite faces of the box itself, thus forming a cascade for the flow of water and therefore the food, from one shelf to another, since the food is placed at the top, i.e. on the top shelf, and when propelled by water through a pump, this food will move from one shelf to another, alternately, to an outlet placed in the area below the bottom shelf, or what is the same, above a sealed lower compartment provided with a water circulation pump, that sucks water from the aquarium itself, since the box of the device or dispenser is designed to be submerged up to most of its height inside the tank and the pump, through its operation, sucks water from the aquarium and by means of an output to a pipe bridge arranged on the sides of the box, introduces water to the areas delimited by the various shelves, and propels the food to the bottom area to exit from these compartments into aquarium itself.

The circulation pump is connected to a cyclic timer with two potentiometers which set the time interval for dispensing the food, and the pump operation time, in such a way that these potentiometers can be operated via a switch on the timer itself, which is equipped with an on/off switch, as well as a power supply plug and the corresponding connection to the pump. Furthermore, the timers are associated with corresponding lights or indicator LEDs which are activated with the operation of the potentiometers.

Accordingly, by means of the two potentiometers of the cyclic timer, which logically is electronic and adjustable, the waiting times between portions and the feeding delays may be determined, meaning that this is not a long-term programmable feeder but instead a food dispenser for short periods of time, specifically so that the food in question can be perfectly assimilated by the fish in a gradual manner and thus avoiding wasted food as far as possible.

As already mentioned, the dispenser can also be used for dry pelleted feed, which will be softened by the water before the fish consume it, thus avoiding a very common problem among fish such as intestinal obstruction and the consequent health disorders.

The dispenser is inserted into the tank and affixed by suction cups provided on one of the side walls of the box, submerged up to the water level indicator line.

### DESCRIPTION OF DRAWINGS

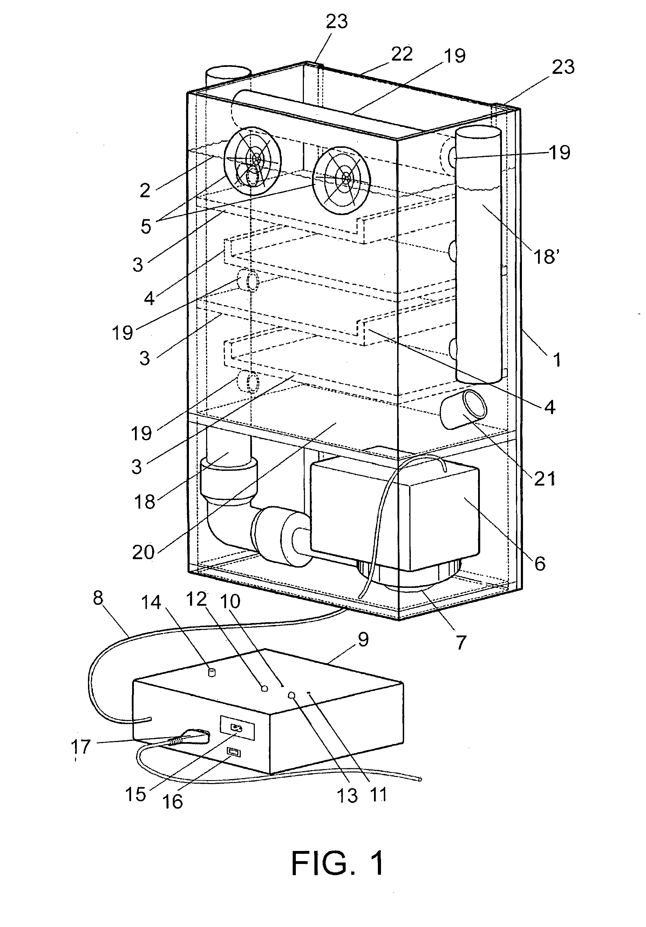

To complement the description that will be made below and in order to assist in the better understanding of the features of the invention according to a preferred practical embodiment thereof, attached as an integral part of said description is a single drawing showing, by way of illustration and not limitation, a general view of the dispenser, consisting of a box and a timer associated with the pump contained inside that box, all embodied in accordance with the object of the invention.

### PREFERRED EMBODIMENT OF THE INVENTION

In view of the aforementioned figure, it can be seen how the dispenser object of the invention is formed by a prismatic box (1) intended to be immersed in water inside a tank, up to a level (2) that corresponds to an indicator on the box itself (1), being open at the top for placing the food, as will be discussed later.

On the inside of the prismatic box (1) and in alignment with its two smaller side faces, a plurality of shelves (3) are horizontally arranged, fixed alternately to one and the other of these side faces, with the edge opposite the fixing point slightly spaced from the opposite side, the opposite end being provided with a small low-height partition (4), for a purpose also to be discussed below.

On the outside of one of its larger faces, the box (1) has a pair of suction cups (5) for fixing to the inside of one wall of the aquarium, and at the submerged height or depth indicated by the marking (2) of the box (1) itself.

Below there is a compartment provided with a pump (6) capable of sucking water from inside the aquarium through the opening (7) arranged in the bottom of the box (1), wherein the pump (6) is connected, via a cable (8), to a timer (9) with two internal potentiometers aligned with the holes (10, 11), and associated with respective indicator lamps (12, 13), such as LEDs, with a switch (14) operating the potentiometers, together with a power supply plug (15) and the timer on/off switch (16), and as shown in the figure the plug (15) is opposite the pins or prongs (17) belonging to a power supply cable.

The pump (6) is connected to an external vertical tube (18) that through an upper bridge (19) is connected to another vertical tube (18') arranged on the opposite side, so that from these tubes (18, 18') there emerge corresponding branches (19) of a smaller diameter passing through the holes on the smaller side faces of the box (1), wherein each branch (19) is arranged in correspondence with the different areas where the shelves (3) are arranged.

In the lower area, established between the bottom (20) which delimits the top of the pump compartment (6) and the lowermost shelf (3) there is a lateral orifice (21) for exit of the food.

The wall or face opposite the suction cups (5) is embodied by a removable lid (22) that slides between two lateral guides (23) provided on that face, or what amounts to the same, in alignment with the edges of the smaller sides of the box (1), in such way that this removable lid (22) allows for maintenance and cleaning, and the replacement or repair of any of the internal parts of the box (1), also providing that the pump compartment (6) includes a functional opening for the maintenance of the pump (6).

The operation is as follows:

Once the dispenser or box (1) is placed inside the tank and affixed by means of the suction cups (5), submerged to the marked line (2), the feed paste is introduced through the top part, depositing it on the top shelve of the several shelves included in the box (1). Logically this food will be introduced thawed and well shredded, avoiding insofar as possible any lumps that could block the flow through the orifice (21).

However, to accelerate the delivery of the food through the orifice (21) into the tank, the button or switch (14) of the timer (9) can be pressed several times, stopping pressing once the food starts emerging from the orifice (21) thus activating the corresponding time delays, so that the dispenser will start to dispense the food in small portions until it runs out, which will vary depending on the amount of food and the time delays, with the particularity that the food will be moved from one shelf (3) to another, in a cascade and will be temporarily held back by the partitions (4) arranged along the free edge of these shelves (3).

Once the food in the dispenser has run out, it can be removed from the aquarium or left permanently until its next use, requiring only operating the on/off switch (16), which in this case will stop the timer (9).

The cleaning of the assembly is easily performed since all the components are removable, as already mentioned above, including the tubes (18, 18') and of course the pump (6).

## Claims

1. Food dispenser for fish in aquariums, intended preferably and primarily for dosing thawed foods and even dry food pellets, comprising a box to be submerged in the aquarium, which includes several shelves at different heights, delimiting a determined number of horizontal areas communicated vertically with each other, in a cascading in an alternate manner, including a bottom compartment in which a pump is fitted that sucks water from the aquarium itself, in which the box is affixed and submerged, propelling said water into the box to distribute and propel food through the areas delimited by the shelves, causing the exit of the food into the aquarium itself, wherein the pump is connected to an external cyclic timer with two timers, whose operation provides, in one case, the time interval for the dispensing food, and in another case, the activation time of the pump for propelling the water into the box and propelling the food from the upper shelf to the orifice provided for such purpose in the area delimited by the last shelf and the bottom of the box where the pump is located; wherein said pump is connected to an outer tube that runs laterally up one of the sides of the box, which tube is connected by an upper bridge, to another tube affixed to the opposite side, wherein such tubes have horizontal branches of smaller diameter corresponding to the areas delimited by the shelves and connected to orifices provided in the lateral walls.

2. Food dispenser for fish in aquariums, according to claim 1, **characterised in that** the shelves are fixed alternately on opposite sides of the box, leaving the edge of each shelf separated from the opposite of their fixation, creating a falling cascade for propelling the food that is deposited on the shelves.

3. Food dispenser for fish in aquariums, according to previous claims, **characterised, in that** the free edge of the shelf has a small vertical partition at the top, determining a means of temporarily retaining the food as it is propelled from shelf to shelf.

4. Food dispenser for fish in aquariums, according to previous claims, **characterised in that** one of the larger faces of the box has a pair of suction cups for fastening the box on the inside face of on the corresponding walls of the aquarium.

5. Food dispenser for fish in aquariums, according to previous claims, **characterised in that** wall opposite to the suction cups is constituted by a removable lid mounted on two vertical guides provided for this purpose on the sides of the box itself.

6. Food dispenser for fish in aquariums, according to previous claims, **characterised in that** the pump compartment includes a flap that can be opened for the removal and maintenance of the pump.

7. Food dispenser for fish in aquariums, according to previous claims, **characterised in that** the bottom of the box has an orifice connected with the aquarium, to enable the pump to suck in water.

8. Food dispenser for fish in aquariums, according to previous claims, wherein the cyclical timer potentiometers are associated with pilot lights indicating the operation thereof.

9. Food dispenser for fish in aquariums, according to previous claims, wherein the cyclic timer includes an on/off switch and an electrical outlet and a switch to start the timing and continuous activation of the pump.
